(19) Europäisches Patentamt
European Patent Office
Office européen des brevets

(11) Veröffentlichungsnummer: **0 144 093**
**B1**

# (12) EUROPÄISCHE PATENTSCHRIFT

(45) Veröffentlichungstag der Patentschrift: **19.04.89**

(51) Int. Cl.⁴: **C 09 B 67/24**, D 06 P 3/66

(21) Anmeldenummer: **84114812.5**

(22) Anmeldetag: **05.12.84**

(54) **Lagerstabile Druckpasten und deren Verwendung.**

(30) Priorität: **08.12.83 CH 6571/83**

(43) Veröffentlichungstag der Anmeldung: **12.06.85 Patentblatt 85/24**

(45) Bekanntmachung des Hinweises auf die Patenterteilung: **19.04.89 Patentblatt 89/16**

(84) Benannte Vertragsstaaten: **BE CH DE FR GB IT LI**

(56) Entgegenhaltungen:
**EP-A-0 058 433**
**EP-A-0 069 300**
**EP-A-0 127 456**
**CH-A-490 468**
**DE-A-2 340 043**
**DE-A-3 049 170**
**US-A-4 118 184**
**US-A-4 149 850**

**CHEMICAL ABSTRACTS, Band 100, nr. 10, 5. März 1984, Seite 75, Nr. 69797r, Columbus, Ohio, US; & JP - A - 58 174 691 (SUMITOMO CHEMICAL CO., LTD.) 13.10.1983**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Scheibli, Peter, Dr., Nussbaumweg 3, CH- 4103 Bottmingen (CH)**
Erfinder: **Känzig, Alex, Im Rosengarten 32, CH- 4106 Therwil (CH)**
Erfinder: **Schaub, Andres, Chillweg 6, CH- 4105 Biel- Benken (CH)**

(74) Vertreter: **Zumstein, Fritz, Dr., Bräuhausstrasse 4, D-8000 München 2 (DE)**

**EP 0 144 093 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Für das Bedrucken von Textilien aus Cellulosefasern hat sich angesichts der immer höheren Echtheitsanforderungen an die in den Druckpasten verwendeten Farbstoffe die Klasse der Reaktivfarbstoffe durchgesetzt. Beim Druck mit Reaktivfarbstoffen auf Cellulosefasern nutzt man die recht beständige kovalente Bindung der Farbstoffe an die Hydroxygruppen der Faser. Die Bindung der Reaktivfarbstoffe an die Faser (Fixierung) erfolgt im alkalischen Medium. Die Wahl des geeigneten Fixieralkalis hängt dabei vor allem von der Reaktivität der verwendeten Reaktivfarbstoffe ab. Die Fixierung erfolgt in der Regel mit Soda oder Natriumhydrogencarbonat oder mit einer Mischung aus Soda oder Natriumhydrogencarbonat und Harnstoff, um ausreichende Fixiergrade zu erreichen. In der Praxis werden jedoch Druckpasten, welche Soda oder Natriumhydrogencarbonat und gegebenenfalls Harnstoff enthalten, als nachteilig empfunden, da viele dieser Druckpasten eine geringe Lagerbeständigkeit haben. Der pH-Wert der Druckpaste ist für die Lagerbeständigkeit massgebend.

Ferner sind Druckpasten zum Bedrucken von cellulosehaltigen Mischfasern, insbesondere Polyester/Cellulose-Mischgewebe, mit Farbstoffmischungen, bestehend aus Dispersions- und Reaktivfarbstoffen, bekannt, die als Fixieralkali Natriumacetat und gegebenenfalls Dicyandiamid oder Harnstoff enthalten. Diese Verfahren wurden entwickelt, um mögliche gegenseitige, ungünstige Beeinflussung von Dispersionsfarbstoffen, Dispergatoren und Reaktivfarbstoffen in Gegenwart von Alkalisalzen zu beheben. Als Nachteil dieser Verfahren wird die beschränkte Auswahl an möglichen reaktiven Gruppen der Reaktivfarbstoffe empfunden.

Es bestand daher ein Bedarf nach lagerstabilen Druckpasten, welche Reaktivfarbstoffe mittlerer bis hoher Reaktivität und ein mildes Fixieralkali enthalten und die gleichzeitig hohe Fixiergrade ermöglichen.

Es wurde nun gefunden, dass die weiter unten beschriebenen neuen Druckpasten diesen Anforderungen genügen.

Gegenstand der vorliegenden Erfindung sind lagerstabile, harnstoff-freie Druckpasten zum Bedrucken von Cellulosefasern, enthaltend als Farbstoff mindestens einen wasserlöslichen Reaktivfarbstoff der Formel

$$D - (X)_m \qquad (1),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin- oder Stilbenreihe, X ein faserreaktiver Rest der aliphatischen, aromatischen oder heterocyclischen Reihe, der direkt oder über ein Brückenglied an den Rest D gebunden ist, und m = 1, 2, 3, 4, 5 oder 6 ist, und pro faserreaktivem Rest X mindestens die zweifache insbesondere mindestens die dreifache et stöchiometrische Menge eines Alkaliacetats, mit der Bedigung, dass die Druckpaste weniger als 60 g Natriumacetat als alkaliacetat pro kg Druckpaste enthält. Überraschenderweise sind die erfindungsgemässen Druckpasten für reine Cellulosefasern sehr gut anwendbar, ohne auf bestimmte faserreaktive Gruppen der Reaktivfarbstoffe beschränkt zu sein; überraschend sind ferner die trotz mildem Fixieralkali erzielbaren hohen Fixiergrade. Die erfindungsgemässen Druckpasten zeigen eine von der Praxis geforderte Lagerbeständigkeit von mehreren Wochen. Überraschend ist ferner, dass dabei die hohen Fixiergrade der Reaktivfarbstoffe auf Cellulosefasern nur dann erzielt werden, wenn man auf den sonst üblichen Zusatz von Harnstoff verzichtet. Überraschend ist ferner, dass bereits die angegebene Mindestmenge an Fixieralkali ausreicht, um auf Cellulose-Fasern hohe Fixiergrade zu erzielen.

Die erfindungsgemässen Druckpasten enthalten ferner als Verdickungsmittel die handelsüblichen Verdicker, insbesondere Alginate, wie z. B. Natriumalginat, und Emulsionen bzw. Halbemulsionen. Daneben sind jedoch auch Johannisbrotkernmehläther, Kristallgummi, Stärkeäther, Tragant und Celluloseäther brauchbar; bei den letztgenannten besteht bei einigen Reaktivfarbstoffen die Gefahr, dass diese mit dem Verdickungsmittel reagieren, wodurch die Verdickungsmittel wasserunlöslich werden und somit zu einer Verhärtung der Faser führen können.

Als weitere Zusätze können die Druckpasten für einige Reaktivfarbstoffe Lösungsvermittler, wie z. B. ε-Caprolactam, Thiodiäthylenglykol, Polyäthylenglykol, Pentaerythrit, Acetin (Mischung von Glykolmono-di-undtriacetat) oder Dicyandiamid enthalten.

Weitere allgemein in Druckpasten übliche Zusätze, wie z. B. m-nitrobenzolsulfonsaures Natrium als Oxydationsmittel, wässrige Formaldehydlösung sowie Wasser,sind im allgemeinen in den erfindungsgemässen Druckpasten enthalten.

Die Menge Fixieralkali in den erfindungsgemässen Druckpasten rich sich nach Art und Anzahl der faserreaktiven Reste X, die eine oder auch mehrere reaktive Abgangsgruppen und/oder aktivierte Doppelbindungen enthalten. Unter einer reaktiven Abgangsgruppe sind solche Abgangsgruppen zu verstehen, die für die nucleophile Substitution mit den Hydroxylgruppen der Cellulose in Gegenwart von Alkali geeignet sind wie z. B. die Halogenatome der 2,4-Difluor-5-chlorpyrimidinyl- oder 2-Fluor-4-amino-1,3,5-triazinyl-Reaktivreste. Unter einer aktivierten Doppelbindung ist eine Doppelbindung zu verstehen, die zur Addition der Hydroxylgruppen der Cellulose geeignet ist, wie z. B. in dem Vinylsulfon-Reaktivrest. Reaktivresten, die nach dem nucleophilen Additionsmechanismus mit der Faser reagieren, ist vielfach eine Eliminierungsstufe vorgelagert, wie z. B. in dem β-Sulfatoäthylsulfonyl- oder dem β-Sulfatoäthylaminosulfonyl-Reaktivrest, der ein Äquivalent Schwefelsäure abspaltet. Diese Reaktivreste benötigen eine entsprechend grössere Menge an Alkaliacetat, Die in den erfindungsgemässen Druckpasten angegebene Mindestmenge an Alkaliacetat bezieht

sich auf den Reaktionsschritt der Farbstoff-Faser-Bindung.

Besonders bevorzugt sind die erfindungsgemässen, lagerstabilen Druckpasten, welche je faserreaktivem Rest X die zweifache bis fünffache im besonderen mindestens die dreifache bis fünffache stöchiometrische Menge Alkaliacetat, wie z. B. Lithiumacetat, insbesondere Kaliumacetat und vor allem Natriumacetat, enthalten.

Als obere Grenze für das Verhältnis von fasereaktivem Rest zu Alkaliacetat hat sich die sechsfache stöchiometrische Menge Alkaliacetat pro faserreaktivem Rest X als geeignet erwiesen.

Höhere Alkaliacetat-Anteile bewirken weder eine noch bessere Lagerbeständigkeit, noch werden die erzielbaren Fixiergrade weiter verbessert.

Gegenstand der Erfindung ist ferner die Verwendung der erfindungsgemässen Druckpasten zum Bedrucken von Cellulose-Fasern, welche dadurch gekennzeichnet ist, dass man das Textilmaterial mit den lagerstabilen Druckpasten bedruckt und anschliessend den Reaktivfarbstoff fixiert.

Die Farbstoff-Fixierung auf der Faser erfolgt nach üblichen Verfahren, wobei Fixierzeit und Fixiertemperatur vom Fasermaterial und der Reaktivität der eingesetzten Reaktivfarbstoffe abhängen. Zur Erzielung einer gleichmässigen und optimalen Farbstoff-Fixierung genügen im allgemeinen Dämpfzeiten im Sattdampf zwischen 30 Sekunden und 12 Minuten, insbesondere 2 bis 10 Minuten, bei 100 bis 140°C, insbesondere 100 bis 105°C. Durch Hochtemperatur-Dämpfen bzw. Trockenhitze-Behandlung wird während 20 Sekunden bis 8 Minuten bei 105 bis 190°C fixiert.

Die Fertigstellung der Drucke erfolgt durch Spülen in heissem und/oder kaltem Wasser und gegebenenfalls anschliessendem Waschen in Gegenwart eines handelsüblichen Waschmittels, nachfolgendem Spülen in Wasser und Trocknen.

Als Cellulose-Fasern kommen natürliche Fasern, wie Baumwolle und Leinen (gebleicht), und regenerierte Fasern, wie Viskose, Polynosic und Kupfer-Kunstseiden in Betracht. Der Druck wird hauptsächlich auf Geweben und Gewirken dieser Fasern vorgenommen.

In den erfindungsgemässen Druckpasten können die Reaktivfarbstoffe der Formel (1) bis zu sechs gleichartige oder verschiedenartige Reaktivreste enthalten.

Bevorzugt sind lagerstabile Druckpasten enthaltend mindestens einen wasserlöslichen Reaktivfarbstoff der Formel

$$\left[ D-(X)_m \right]-(SO_3^{\ominus} Ka)_n \qquad (2),$$

worin D der Rest eines Monoazo- oder Disazofarbstoffes, eines Metallkomplexazo-, Anthrachinon-, Formazan- oder Dioxazinfarbstoffes, Ka ein Kation und n = 1, 2, 3, 4, 5 oder 6 ist und X und m die unter Formel (1) angegebenen Bedeutungen haben. Insbesondere ist m = 1 oder 2 und unabhängig davon n = 2, 3 oder 4.

Als wasserlösliche Reaktivfarbstoffe der Formel (1) kommen die unter Formel (1) angegebenen Farbstoffreste D in Betracht, die ein bis sechs, insbesondere bis zwei Reaktivreste X enthalten.

Unter faserreaktiven Resten X sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Vorzugsweise bedeutet X einen faserreaktiven Rest der aliphatischen oder heterocyclischen Reihe, der direkt oder über ein Brückenglied an den Rest D gebunden ist.

Vorzugsweise ist X direkt oder über eine gegebenenfalls monoalkylierte Aminogruppe wie z. B. -NH-, $-N(CH_3)-$, $-N(C_2H_5)-$ oder $-N(C_3H_7)-$ oder über ein eine Aminogruppe enthaltendes Brückenglied an den Rest D gebunden.

Als faserreaktive Reste X in Formel (1) kommen z. B. die folgenden aliphatischen und aromatischen Reste in Betracht:

Vinylsulfonyl-, β-Chloräthylsulfonyl-, β-Sulfatoäthylsulfonyl-, β-Acetoxy-äthylsulfonyl-, Phosphonooxyäthylsulfonyl-, β-Thiosulfato-äthylsulfonyl-, N-Methyl-N-(β-sulfatoäthyl-sulfonyl)-amino, Acryloyl, Mono-, Di- oder Trichloracryloyl wie $-CO-CCl=CH_2$,$-CO-CH=CH-Cl$, $-CO-CCl=CH-CH_3$; Mono-, Di- oder Tribromacryloyl wie $-CO-CBr=CH_2$, $-CO-CH=CH-Br$, $-CO-CBr=CH-CH_3$; sowie $-CO-CCl=CH-COOH$, $-CO-CH=CCl-COOH$, $-CO-CBr=CH-COOH$, $-CO-CH=CBr-COOH$; $-CO-CCl=CCl-COOH$, $-CO-CBr=CBr-COOH$; Vorstufen des Acryloyl-Restes und der Derivate des Acryloyl-Restes wie β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl; sowie 2-Fluor-2-chlor-3,3-di-fluorcyclobutan-1-carbonyl, 2,2,3,3-Tetrafluorcyclobutan-carbonyl-1- oder sulfonyl-1-, β-(2,2,3,3-Tetrafluorcyclobutyl-1)-acryloyl, α- oder β-Alkenyl- oder Arylsulfonyl-acryloyl-Gruppe wie α- oder β-Methylsulfonylacryloyl, Propiolyl, Chloracetyl, Bromacetyl, 4-(β-Chloräthyl-sulfonyl)-butyryl, 4-Vinylsulfonyl-butyoyl, 5-(β-Chloräthyl-sulfonyl)-valeryl, 5-Vinylsulfonyl-valeryl, 6-(β-Chloräthyl-sulfonyl)-caproyl, 6-Vinylsulfonyl-carproyl; sowie 4-Fluor-3-nitro-benzoyl, 4-Fluor-3-nitrophenylsulfonyl, 4-Fluor-3-methyl-sulfonylbenzoyl, 4-Fluor-3-cyanbenzoyl, 2-Fluor-5-methylsulfonylbenzoyl.

Des weiteren sind faserreaktive Reste X der heterocyclischen Reihe zu nennen, wie z. B. 2,4-Dichlortriazinyl-6-, Mono- Di- oder Tri-halogenpyrimidinylreste, wie 2,4-Dichlorpyrimidinyl-6-, 2,4,5-Tri-chlorpyrimidinyl-6-, 2,4-Dichlor-5-nitro- oder 5-methyl- oder -5-carboxymethyl- oder -5-carboxy- oder -5-cyano- oder -5-vinyl- oder -5-sulfo- oder -5-mono-, -di- oder trichlormethyl- oder 5-methyl-sulfonylpyrimidinyl-6-, 2,5-Dichlor-4-methylsufonyl-pyrimidinyl-6-, 2-Fluor-4-pyrimidinyl-,2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder 5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; 2,4-Bis-methylsulfonyl-pyrimidinyl-4-, 2,5-Bis-methylsulfonyl-5-chlor-pyrimidinyl-4-, 2-Methylsulfonyl-pyrimidinyl-4-, 2-Phenylsulfonyl-pyrimidinyl-4-, 2-Methylsulfonyl-5-chlor-6-methylpyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-methyl-pyrimidinyl-4-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Äthylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2,4-Dichlorpyrimidin-6-carbonyl oder 6-sulfonyl, 2,4-Dichlorpyrimidin-5-carbonyl- oder 5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder 5-sulfonyl, 2-Methylsulfonyl-6-chlorpyrimidin-4- und 5-carbonyl, 2,6-Bis-(methylsulfonyl)-pyrimidin-4- oder -5-carbonyl, 2-Äthylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl-oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -5-sulfonyl, 1,4-Dichlorphthalazin-6-sulfonyl- oder -6-carbonyl, 2,4-Dichlorchinazolin-7- oder -6-sulfonyl- oder carbonyl, 2,4,6-Trichlorchinazolin-7- oder -8-sulfonyl, 2- oder 3- oder 4-(4',5'-Dichlorpyridazon-6'-yl-1')-phenylsulfonyl- oder carbonyl, β-(4',5'-Dichlorpyridazinon-6'-yl-1')-propionyl, 3,6-Dichlorpyridazin-4-carbonyl-oder 4-sulfonyl, 2-Chlorbenzthiazol-5- oder 6-carbonyl- oder -5- oder -6-sulfonyl, 2-Arylsulfonyl- oder -Alkylsulfonylbenzthiazol-5- oder -6-carbonyl- oder -5- oder -6-sulfonyl, wie 2-Methylsulfonyloder 2-Ähylsulfonylbenzthiazol-5- oder -6-sulfonyl- oder -carbonyl, 2-Phenylsulfonyl-benzthiazol-5- oder -6-sulfonyl- oder carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl- oder -sulfonyl, 2-Chlor-1-methylbenzimidazol-5- oder -6-carbonyl- oder -sulfonyl, 2-Chlor-4-methylthiazol-(1,3)-5-carbonyl) oder -4- oder -5-sulfonyl; ammoniumgruppenhaltige Triazinringe, wie 2-Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino-oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-phenylamino- oder 4-(sulfophenylamino)-triazinyl-6-Reste, die in 2-Stellung über eine Stickstoffbindung das 1,4-Bis-aza-bicyclo[2,2,2]-octan oder das 1,2-Bis-aza-bicyclo-[0,3,3]-octan quartär gebunden enthalten, 2-pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino, Äthylamino- oder β-Hydroxy-äthylamino-, oder Alkoxy-, wie Methoxy- oder Äthoxy-, oder Aryloxy-, wie Phenoxy-, oder Sulfophenoxy-Gruppen substituiert sind.

Besonders interessante faserreaktive Reste sind Fluor-1,3,5-triazin-reste der Formel

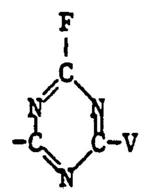

,

wobei als Substituenten V am Triazinring insbesondere zu nennen sind: $-NH_2$, Alkylamino-, N,N-Dialkylamino-, Cycloalkylamino-, N,N-Dicycloalkylamino-, Aralkylamino- Arylaminogruppen gemischt substituierte Aminogruppen, wie N-Alkyl-N-cyclohexylamino- und N-Alkyl-N-arylamino-gruppen, ferner Aminogruppen, die

heterocyclische Reste enthalten, welche weitere ankondensierte carbocyclische Ringe aufweisen können, und Aminogruppen, worin das Aminostickstoffatom Glied eines N-hetero-cyclischen Ringes ist, der gegebenenfalls weitere Heteroatome enthält, sowie Hydrazino und Semicarbazido. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Reste sowie die N-heterocyclischen Ringe können weitersubstituiert sein, z. B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt: $-NH_2$, Methylamino, Äthylamino, Propylamino, Isopropylamino, Butylamino, Hexylamino, β-Methoxyäthylamino, γ-Methoxypropylamino, β-Äthoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylanino, N-Äthyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino, Piperazino, Hydrazino und Semicarbazido.

Die Reaktiv-Farbstoffe der Formel (1) können bis zu sechs gleichartige oder verschiedenartige Reaktivgruppen enthalten.

Vorzugsweise enthalten die Reaktivfarbstoffe der Formel (1) hochreaktive Reste X. Darunter werden solche Reste X verstanden, die reaktiver sind als 2-Chlor-1,3,5-triazinylreste die in 4-Stellung durch einen der oben genannten Substituenten V substituiert sind. Als Beispiele solcher hochreaktiven Reste X kommen z. B. in Betracht: 2-Fluor-4-(V)-triazinyl-6-, wobei die oben für V angegebenen Substituenten in Betracht kommen, 2,4-Dichlortriazinyl-6-, 2,4-Dichlorpyrimidin-5-carbonyl-, 5-Cyano- oder 5-Methylsulfonyl-2,4-dichlorpyrimidinyl-6-, Difluorchloropyrimidinyl-, wie 2,4-Difluor-5-chlorpyrimidinyl-6-, 2,3-Dichlorchinoxalin-6-carbonyl-, Vinylsulfonyl-, β-Sulfatoäthylsulfonyl-, β-Thiosulfatoäthylsulfonyl-, β-Acetoxyäthylsulfonyl-, β-Chloräthylsulfonyl-.

Besonders bevorzugt sind die erfindungsgemässen, lagerstabilen Druckpasten, welche mindestens einen Reaktivfarbstoff der Formel (2) enthalten, worin X einen Rest der Formel

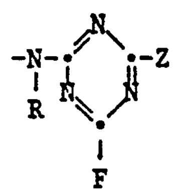

(3)

bedeutet, worin R Wasserstoff oder $C_{1-4}$-Alkyl, wie Methyl, Äthyl, propyl, Isopropyl, Butyl, sek.-Butyl, Isobutyl oder tert.-Butyl, und Z eine gegebenenfalls substituierte Aminogruppe ist, oder worin X einen über eine -N(R)-Gruppe gebundenen Difluorchlorpyrimidinylrest oder einen direkt oder über ein aliphatisches Brückenglied gebundenen Vinylsulfonyl-, β-Sulfatoäthylsulfonyl- β-Thiosulfatoäthylsulfonyl-, β-Chloräthylsulfonyl- oder β-Acetoxyäthylsulfonylrest bedeutet.

Die Reaktivfarbstoffe der Formel (1) leiten sich insbesondere von den folgenden Farbstoffen ab:

1. Monoazoverbindungen der Formel

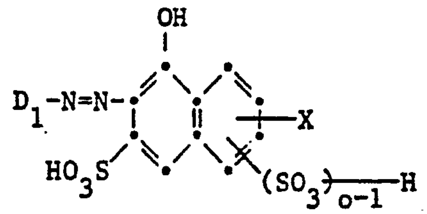

(4),

worin $D_1$ einen Rest der Benzol- oder Naphtalinreihe bedeutet, wie z. B. den Phenyl-, Naphthyl-, Stilben-, Diphenyl-, Benzthiazolylphenyl- oder Diphenylaminrest, der durch Sulfogruppen, Halogen, wie z. B. Chlor, Acylaminogruppen wie z. B. Acetylamino oder Benzoylamino, Aminogruppen, wie z. B. $-NH_2$ und Methylamino, Alkoxy, wie z. B. Methoxy, Hydroxy und Carboxy sowie faserreaktive Reste X substituiert sein kann, X vorzugsweise direkt oder über eine Aminogruppe, wie z. B. $-NH_2$ oder $-NHCH_3$, an die 5-, 6-, 7- oder 8-Stellung des Naphthalinkerns gebunden ist und die unter Formel (1) angegebene Bedeutung hat.

2. Disazoverbindungen der Formel (4), worin $D_1$ einen Rest der Azobenzol-, Azonaphthalin- oder Phenylazonaphthalinreihe bedeutet und $D_1$ und der Naphthalinkern, wie in Klasse 1 angegeben, substituiert sein können.

3. Disazoverbindungen der Formel

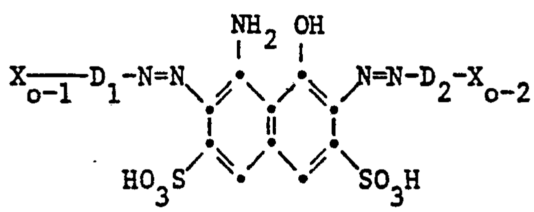

(5),

worin X die unter Formel (1) angegebene Bedeutung hat und $D_1$ und $D_2$ unabhängig voneinander die für $D_1$ unter Formel (4) angegebenen Bedeutungen haben.

4. Monoazoverbindungen der Formel

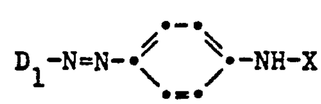

(6),

worin $D_1$ einen unter Formel (4) angegebenen Rest, insbesondere ein Disulfonaphthyl- oder Stilbenrest bedeutet und X die unter Formel (1) angegebene Bedeutung hat und der Benzolkern weitere Substituenten, wie z. B. Halogenatome oder Alkyl-, Alkoxy-, Carbonsäure-, Ureido- und Acylaminogruppen enthalten kann.

5. Mono- oder Disazoverbindungen der Formel

$X-D_1-N=N-K_1$ (7),

worin $D_1$ einen Rest der Azobenzol-, Azonaphthalin- oder Phenylazonaphthalinreihe oder vorzugsweise einen Rest der Benzol- oder Naphthalinreihe, der durch die für $D_1$ unter Formel (4) angegebenen Substituenten substituiert sein kann, bedeutet, und $K_1$ den Rest einer Naphtholsulfonsäure oder den Rest einer Ketomethylenverbindung, wie z. B. ein Acetoacetarylid insbesondere Acetoacetanilid oder ein 5-Pyrazolon, insbesondere ein 1-Phenyl-3-methyl-5-pyrazolon, mit der OH-Gruppe in Nachbarstellung zur Azogruppe bedeutet und X direkt oder über eine Aminogruppe, wie z. B. $-NH_2$, Methylamino oder Benzoylamino an $D_1$ gebunden ist. Vorzugsweise bedeutet $D_1$ einen Rest der Benzolreihe der eine Sulfonsäuregruppe enthält.

6. Mono- oder Disazoverbindungen der Formel

$D_1-N=N-K_2-X$ (8),

worin $D_1$ einen der für $D_1$ in den Klassen 1 und 2 oben definierten Rest und $K_2$ den Rest einer enolisierbaren Ketomethylenverbindung, wie z. B. ein Acetoacetarylid insbesondere Acetoacetanilid oder ein 5-Pyrazolon, insbesondere ein 1-phenyl-3-methyl-5-pyrazolon, mit der OH-Gruppe in Nachbarstellung zur Azogruppe bedeuten und X die in den Klassen 1 bis 4 angegebene Bedeutung hat.

7. Metallkomplexverbindungen, wie z. B. Kupfer-, Chrom- und Kobaltkomplexe, der Farbstoffe der Formeln (4) bis (8), worin $D_1$, $K_1$ und $K_2$ die angegebenen Bedeutungen haben und ferner eine metallisierbare Gruppe,

wie z. B. eine Hydroxyl-, Methoxy- oder Carbonsäuregruppe, in Nachbarstellung zur Azogruppe enthalten.

8. Anthrachinonverbindungen, welche den Reste X An einer Alkylamino- oder Arylaminogruppe, die selbst an die α-Stellung des Anthrachinonkerns gebunden ist, enthalten, insbesondere Anthrachinonverbindungen der Formel

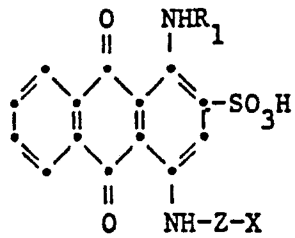

(9),

worin $R_1$ Wasserstoff, Alkyl oder Aryl insbesondere Phenyl und Z ein Brückenglied bedeutet, welches vorwiegend ein zweiwertiger Rest der Benzolreihe ist, wie z. B. ein Phenylen-, Diphenylen- oder 4,4'-Stilben- oder Azobenzolrest. Vorzugsweise sollte Z eine Sulfonsäuregruppe für jeden vorliegenden Benzolring enthalten. Der Anthrachinonkern kann zusätzlich eine Sulfonsäuregruppe in der 5-, 6-, 7- oder 8-Stellung enthalten. Der Rest X ist direkt oder über eine Aminogruppe an Z gebunden.

9. Phthalocyaninverbindungen der Formel

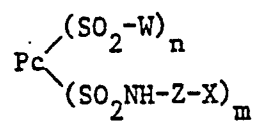

(10),

worin Pc einen Phthalocyaninkern, vorzugsweise Kupferphthalocyanin, W-OH und/oder $-NH_2$, Z ein Brückenglied vorzugsweise eine aliphatische, cycloaliphatische oder aromatische Brücke bedeuten, und n und m je 1, 2 oder 3 bedeuten und gleich oder verschieden sein können, vorausgesetzt, dass n + m nicht grösser als 4 ist. Vorzugsweise enthalten die Phthalocyaninverbindungen eine wasserlöslichmachende Gruppe, wie z. B. eine Sulfonsäuregruppe, und eine Gruppe -Z-N(R)-X worin R Wasserstoff oder Alkyl ist und X die unter Formel (I) angegebene Bedeutung hat.

10. Nitrofarbstoffe der Formel

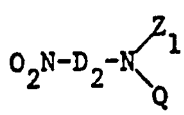

(11),

worin $D_2$ ein Naphthalinkern oder Benzolkern, welcher weitersubstituiert sein kann, ist, das Stickstoffatom N in o-Stellung zur Nitrogruppe steht, $Z_1$ Wasserstoff oder einen gegebenenfalls substituierten Kohlenwasserstoffrest und Q Wasserstoff oder einen an den Stickstoff durch ein Kohlenstoffatom gebundenen organischen Rest bedeutet, und worin Q und $Z_1$ nicht beide Wasserstoff sind, und Q an $Z_1$, wenn $Z_1$ ein Kohlenwasserstoffrest ist, oder an $D_2$ in ortho-Stellung zum Stickstoffatom N unter Bildung eines heterocyclischen Ringes gebunden sein kann, und welche wenigstens einen Rest X insbesondere einen Rest -N(R)-X, worin R Wasserstoff oder Alkyl ist und X die unter Formel (1) angegebene Bedeutung hat, enthalten; insbesondere Nitrofarbstoffe der Formel

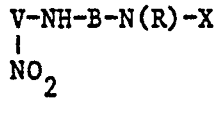

(12),

worin V und B monocyclische Arylkerne bedeuten und die Nitrogruppe in V in o-Stellung zur -NH Gruppe steht.

11. Metallkomplexe von Formazanfarbstoffen der Formel

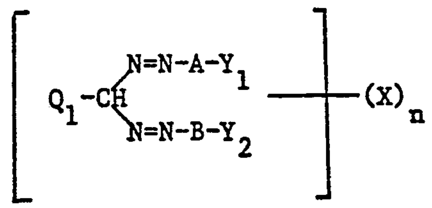 (13),

worin $Q_1$ ein organischer Rest, eine Nitro- oder Cyanogruppe ist, A und B Reste von Diazokomponenten der Benzol-, Naphthalin- oder heterocyclischen Reihe und $Y_1$ und $Y_2$ je einen in o-Stellung zur Azogruppe gebundenen, zur Komplexbildung mit einem Schwermetall befähigten Substituenten bedeuten und X die unter Formel (1) angegebene Bedeutung hat und n = 1 oder 2 ist.

Der Rest $Q_1$ ist vor allem ein Rest der Benzolreihe, wie z. B. Phenyl oder Sulfophenyl, oder ein Alkylrest, wie z. B. Methyl, eine niedrigmolekulare Alkanoylgruppe, wie z. B. Acetyl, eine Carbalkoxygruppe mit bis zu 4 Kohlenstoffatomen, eine Benzoylgruppe oder ein heterocyclischer Rest, und A und B sind vorzugsweise mit Sulfo-, Sulfonamido- oder Alkylsulfonylgruppen substituierte Phenylreste. $Y_1$ und $Y_2$ sind vor allem OH- und COOH-Gruppen. Geeignete Schwermetalle sind Kupfer, Chrom, Kobalt und Nickel.

12. Dioxazine der Formel

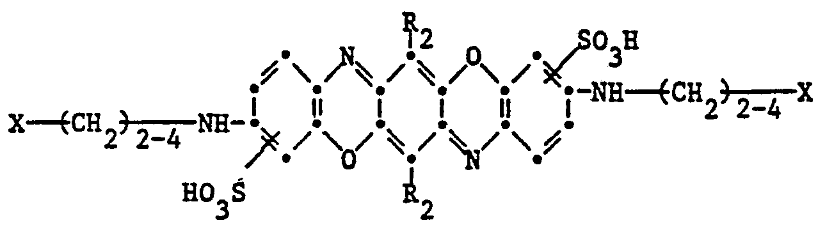 (14),

worin $R_2$ $C_{1-4}$-Alkyl, wie z. B. Methyl, oder Halogen wie z. B. Chlor ist und X die unter Formel (1) angegebene Bedeutung hat.

Ganz besonders bevorzugt sind lagerstabile Druckpasten, welche einen Reaktivfarbstoff der Formel

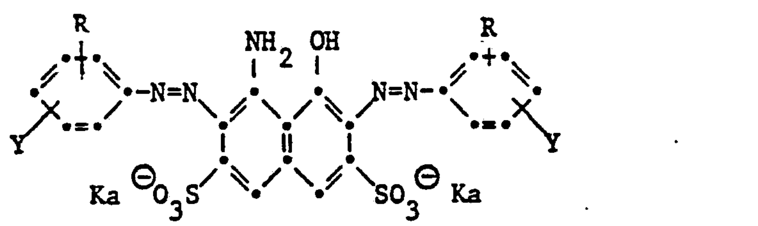 (15) enthalten,

worin ein Y der 2-Fluor-4-(Z)-1,3,5-triazinyl-6-aminorest, worin Z eine gegebenenfalls substituierte Aminogruppe, insbesondere die als V bezeichneten Reste, bedeutet oder der β-Sulfatoäthylsulfonylrest und das andere Y der β-Sulfatoäthylsulfonylrest oder $-SO_3^{\ominus}Ka$, ein R Wasserstoff und das andere R Wasserstoff oder $-SO_3^{\ominus}Ka$ und Ka ein Kation ist, eine Natriumalginatverdickung und je faserreaktiver Abgangsgruppe oder je aktivierter Doppelbindung die mindestens dreifach stöchiometrische Menge Natriumacetat sowie Wasser und gegebenenfalls Oxydationsmittel enthalten.

Das Kation Ka in den Formeln (2) und (15) bedeutet ein Wasserstoff-, Natrium-, Kalium-, Lithium- oder Ammonium-Ion oder das Kation eines organischen Amins wie z. B. des Triäthanolamins.

Die erfindungsgemässen Druckpasten zeichnen sich gegenüber den bekannten Druckpasten mit Natriumhydrogencarbonat als Fixieralkali durch eine deutlich bessere Lagerbeständigkeit aus.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

**Beispiel 1:**

<u>Druckpaste A</u>

2,5 Teile des Reaktivfarbstoffes der Formel

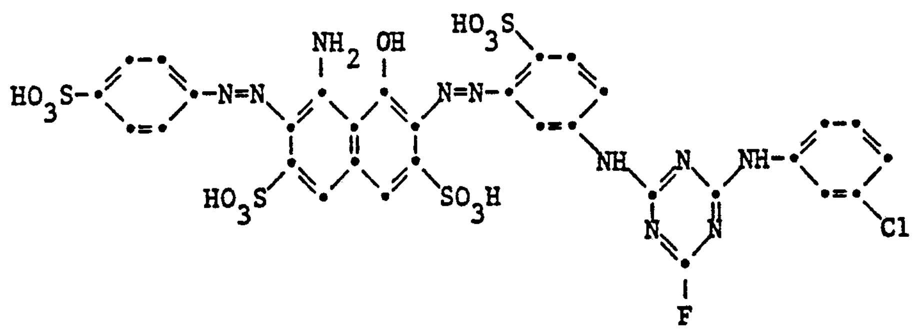

mit einem Wirkstoffgehalt von 69 Prozent werden unter schnellem Rühren in 97,5 Teile einer Stammverdickung, enthaltend 50 Teile 5 prozentige Natriumalginat-Verdickung, 44,4 Teile Wasser, 2 Teile Natriumacetat ($\cdot 3\ H_2O$), 1 Teil m-nitrobenzolsulfonsaures Natrium sowie 0,1 Teile 40 prozentige wässrige Formaldehyd-Lösung, eingestreut.

Druckpaste B

Es werden alle Zusätze wie in der Druckpaste A verwendet, ausser dass man 2 Teile Natriumacetat ($\cdot 3\ H_2O$) durch 1,2 Teile Natriumhydrogencarbonat ersetzt und statt 44,4 Teile Wasser 45,2 Teile Wasser zusetzt.

Mit den so erhaltenen Druckpasten bedruckt man ein mercerisiertes Baumwollgewebe, trocknet und dämpft den erhaltenen bedruckten Stoff 8 Minuten bei 103°C im Sattdampf. Das bedruckte Gewebe wird dann gespült, gegebenenfalls kochend geseift und nochmals gespült, und anschliessend getrocknet.

Zur Dokumentation der verbesserten Druckpasten-Stabilität zeigt Tabelle 1 die Fixiergrade (berechnet aus den Extinktionen (bei $\lambda$ max.) der Extraktionslösungen von Gewebeproben der nicht ausgewaschenen Drucke, jeweils fixiert und nicht fixiert), die sich ergeben, wenn man mit der Druckpaste mit Natriumacetat als Fixieralkali (Druckpaste A) und als Vergleich dazu mit äquimolaren Mengen Natriumhydrogencarbonat als Fixieralkali (Druckpaste B) ein mercerisiertes Baumwollgewebe bedruckt (Auftragsmenge: 900 g Paste pro Kilo Substrat), nachdem die Druckpaste die angegebene Zeit bei 42°C gelagert worden ist; den erhaltenen bedruckten Stoff 2 Minuten bei 120°C trocknet und 8 Minuten bei 103°C im Sattdampf dämpft.

**Tabelle 1**

| Lagerzeite | Fixiergrad | |
|---|---|---|
| (bei 42°C) | Druckpaste A | Druckpaste B |
| sofort | 76 % | 74 % |
| 1 Tag | 76 % | 73 % |
| 3 Tage | 74 % | 70 % |
| 7 Tage | 72 % | 62 % |
| 15 Tage | 71 % | 55 % |
| 21 Tage | 70 % | 50 % |
| 28 Tage | 67 % | 43 % |
| 36 Tage | 64 % | 38 % |
| 42 Tage | 63 % | 34 % |
| 49 Tage | 59 % | 27 % |

**Beispiel 2:**

Druckpaste A

4 Teile des Reaktivfarbstoffes der Formel

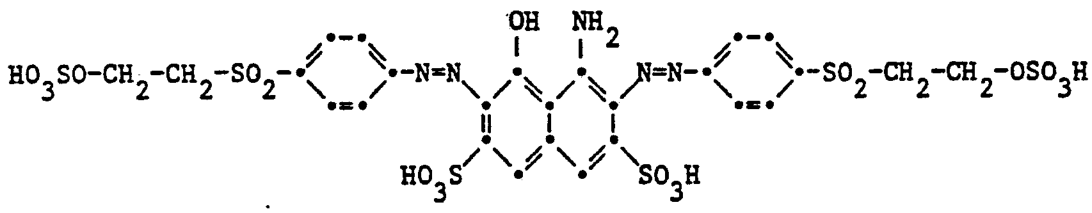

mit einem Wirkstoffgehalt von 62 Prozent werden unter schnellem Rühren in 96 Teile einer Stammverdickung, enthaltend 50 Teile 5 prozentige Natriumalginat-Verdickung 40,9 Teile Wasser, 4 Teile Natriumacetat ($\cdot 3\ H_2O$), 1 Teil m-nitrobenzolsulfonsaures Natrium sowie 0,1 Teile 40 prozentige wässrige Formaldehyd-Lösung, eingestreut.

Druckpaste B

Es werden alle Zusätze wie in Druckpaste A verwendet, ausser dass man 4 Teile Natriumacetat ($\cdot 3\ H_2O$) durch 2,5 Teile Natriumhydrogencarbonat ersetzt und statt 40,9 Teile Wasser 42,4 Teile Wasser zusetzt.

Mit den so erhaltenen Druckpasten bedruckt man ein mercerisiertes Baumwollgewebe, trocknet und dämpft den erhaltenen bedruckten Stoff 8 Minuten bei 103°C im Sattdampf. Das bedruckte Gewebe wird dann gespült und anschliessend getrocknet.

Zur Dokumentation der verbesserten Druckpasten-Stabilität verfährt man genau wie in Beispiel 1 beschrieben, wobei die in Tabelle 2 dargelegten Fixiergrade resultieren.

**Tabelle 2**

| Lagerzeit (bei 42°C) | Fixiergrad Druckpaste A | Druckpaste B |
|---|---|---|
| sofort | 95 % | 91 % |
| 1 Tag | 95 % | 90 % |
| 3 Tage | 95 % | 86 % |
| 7 Tage | 93 % | 64 % |
| 15 Tage | 94 % | 57 % |
| 21 Tage | 94 % | 52 % |
| 28 Tage | 94 % | 50 % |
| 36 Tage | 93 % | 46 % |
| 42 Tage | 93 % | 47 % |
| 49 Tage | 93 % | 47 % |
| 56 Tage | 92 % | 44 % |
| 63 Tage | 92 % | 44 % |
| 70 Tage | 91 % | 36 % |

Reduziert man im obigen Beispiel in der Druckpaste A die Menge an Natriumacetat ($\cdot 3\ H_2O$) auf 2 Teile und verwendet 10 Teile des angegebenen Reaktivfarbstoffes, so erhält man ein Verhältnis von Fixieralkali zu Reaktivfarbstoff wie in der DE-AS 1 916 627 in Beispiel 3 angegeben. Auf mercerisiertem Baumwollgewebe resultiert nach 8 Minuten Dämpfzeit bei 103°C im Sattdampf ein Fixiergrad von ca. 20 % und nach 20 Minuten Dämpfzeit bei 112°C und 0,5 atü im Sterndämpfer gemäss Beispiel 3 der DE-AS ein Fixiergrad von ca. 75 %. Demgegenüber zeigt die in obigem Beispiel verwendete Druckpaste mit grösserer Menge an Natriumacetat einen deutlich höheren Fixiergrad (95 %).

Ersetzt man in Beispiel 2 die 4 Teile des dort angegebenen Reaktivfarbstoffes durch 4 Teile eines der nachfolgend angegebenen Reaktivfarbstoffe, so resultieren mit Natriumacetat als Fixieralkali bei sonst gleicher Verfahrensweise ähnliche Vorteile, wie in Beispiel 2 angegeben:

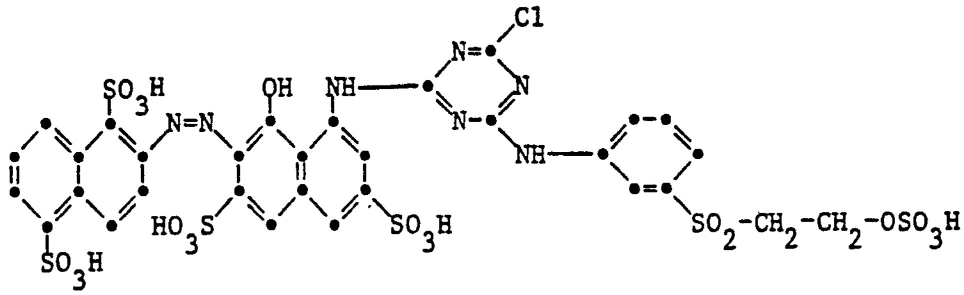

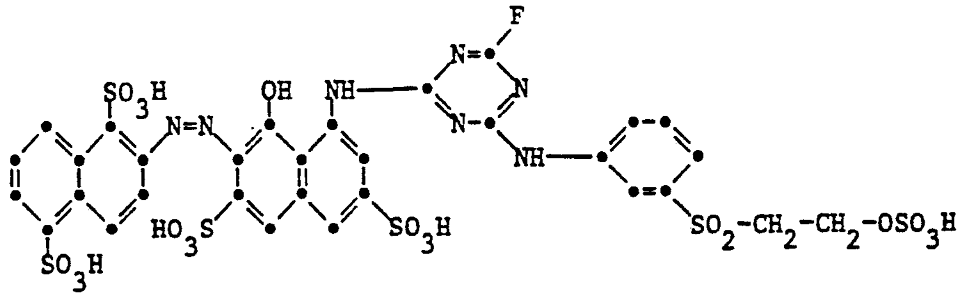

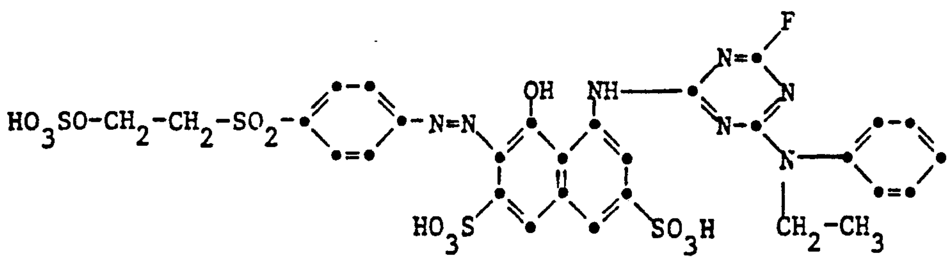

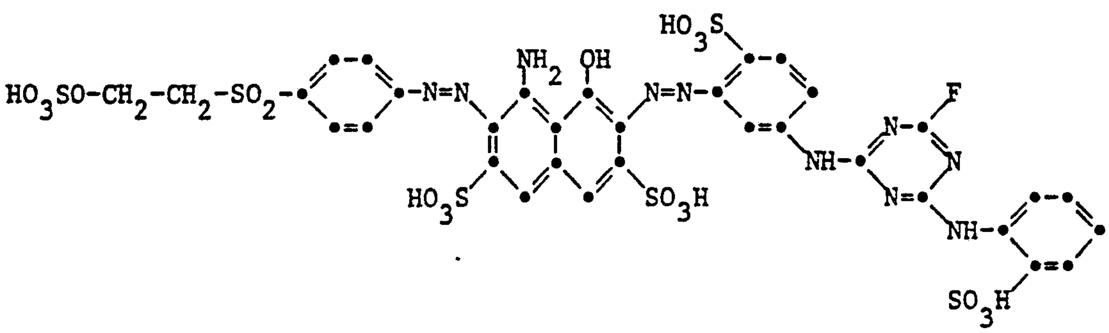

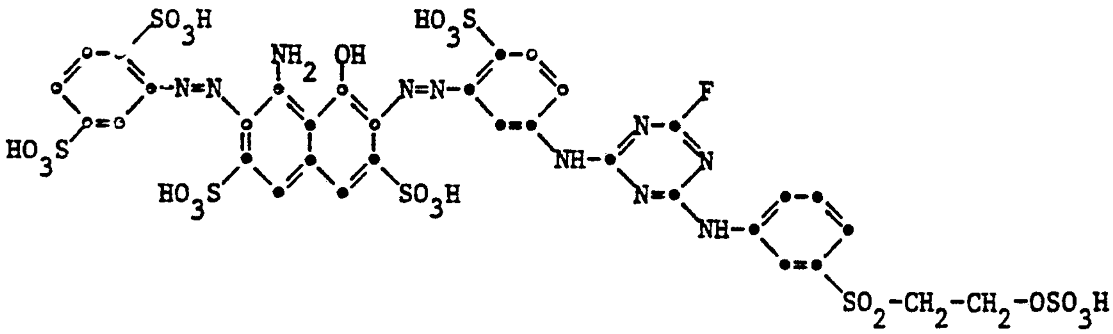

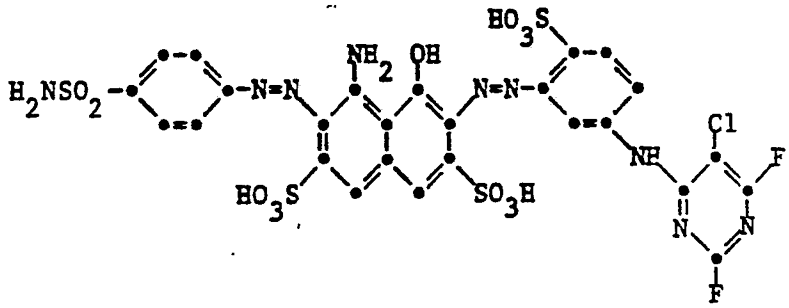

**Beispiel 3:**

Druckpaste A

2,5 Teile des Reaktivfarbstoffes der Formel

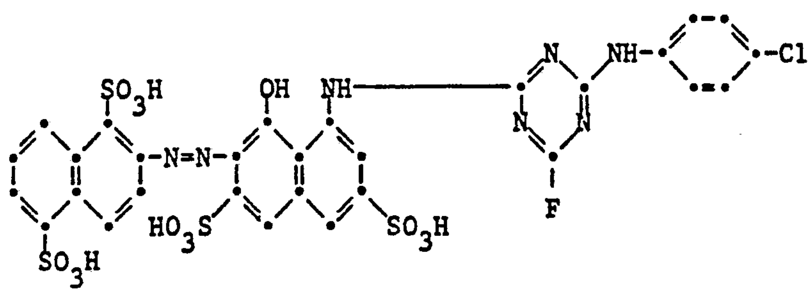

mit einem Wirkstoffgehalt von 60 Prozent werden unter schnellem Rühren in 97,5 Teile einer Stammverdickung, enthaltend 50 Teile 5 prozentige Natriumalginat-Verdickung, 44,8 Teile Wasser, 1,6 Teile Natriumacetat ($\cdot 3$ $H_2O$), 1 Teil m-nitrobenzolsulfonsaures Natrium sowie 0,1 Teile 40 prozentige wässrige Formaldehyd-Lösung, eingestreut.

Druckpaste B

Es werden alle Zusätze wie in Druckpaste A verwendet, ausser dass man 1,6 Teile Natriumacetat ($\cdot 3\ H_2O$) durch 1 Teil Natriumhydrogencarbonat ersetzt und statt 44,8 Teile Wasser 45,4 Teile Wasser zusetzt.

Mit den so erhaltenen Druckpasten bedruckt man ein mercerisiertes Baumwollgewebe, trocknet und dämpft den erhaltenen bedruckten Stoff 8 Minuten bei 103°C im Sattdampf. Das bedruckte Gewebe wird dann gespült und anschliessend getrocknet.

Zur Dokumentation der verbesserten Druckpasten-Stabilität verfährt man genau wie in Beispiel 1 beschrieben, ausser dass man die Druckpasten statt bei 42°C bei 20°C lagert. Dabei resultieren die in Tabelle 3 dargelegten Fixiergrade.

**Tabelle 3**

| Lagerzeit (bei 20°C) | Fixiergrad Druckpaste A | Fixiergrad Druckpaste B |
|---|---|---|
| sofort | 72 % | 68 % |
| 3 Tage | 72 % | 68 % |
| 7 Tage | 72 % | 67 % |
| 14 Tage | 71 % | 66 % |
| 21 Tage | 71 % | 66 % |
| 28 Tage | 70 % | 62 % |
| 35 Tage | 69 % | 60 % |
| 42 Tage | 68 % | 58 % |
| 49 Tage | 68 % | 56 % |
| 56 Tage | 67 % | 54 % |
| 81 Tage | 64 % | 47 % |

**Patentansprüche**

1. Lagerstabile, hernstoff-freie Druckpasten zum Bedrucken von Cellulosefasern, enthaltend als Farbstoff mindestens einen wasserlöslichen Reaktivfarbstoff der Formel

$$D\text{-}(X)_m \qquad (1),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin- oder Stilbenreihe, X ein faserreaktiver Rest der aliphatischen, aromatischen oder heterocyclischen Reihe, der direkt oder über ein Brückenglied an den Rest D gebunden ist, und m = 1, 2, 3 4, 5 oder 6 ist, und pro faserreaktivem Rest mindestens die zweifache stöchiometrische Menge eines Alkaliacetats, mit der Bedingung, dass die Druckpaste weniger als 60 g Natriumacetat als Alkaliacetat pro kg Druckpaste enthält.

2. Lagerstabile Druckpasten gemäss Anspruch 1, welche je faserreaktivem Rest X mindestens die dreifache stöchiometrische Menge Alkaliacetat enthalten.

3. Lagerstabile Druckpasten gemäss Anspruch 1, worin das Alkaliacetat Kaliumacetat oder insbesondere Natriumacetat ist.

4. Lagerstabile Druckpasten gemäss Anspruch 1, worin mindestens ein wasserlöslicher Reaktivfarbstoff der Formel

$$\left[ D\text{-}(X)_m \right] (SO_3^{\ominus}\ Ka)_n \qquad (2)$$

enthalten ist, worin D der Rest eines Monoazo- oder Disazofarbstoffes, eines Metallkomplexazo-, Anthrachinon-, Formazan- oder Dioxazinfarbstoffes, Ka ein Kation und n = 1,2,3,4,5 oder 6 ist und X und m die in Anspruch 1 angegebenen Bedeutungen haben.

5. Lagerstabile Druckpasten gemäss Anspruch 4, welche mindestens einen Reaktivfarbstoff der Formel (2) enthalten, worin X einen Rest der Formel N

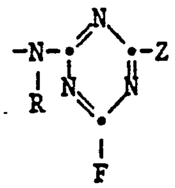

(3)

bedeutet, worin R Wasserstoff oder $C_{1-4}$-Alkyl und 2 eine gegebenenfalls substituierte Aminogruppe ist, oder worin X einen über eine -N(R)-Gruppe gebundenen Difluorchlorpyrimidinylrest oder einen direkt oder über ein aliphatisches Brückenglied gebundenen Vinylsulfonyl-, β-Sulfatoäthylsulfonyl-, β-Thiosulfatoäthylsulfonyl, β-Chloräthylsulfonyl- oder β-Acetoxyäthylsulfonylrest bedeutet.

6. Lagerstabile Druckpasten gemäss Anspruch 4, worin m = 1 oder 2 ist.

7. Lagerstabile Druckpasten gemäss Anspruch 4, worin n = 2, 3 oder 4 ist.

8. Lagerstabile Druckpasten gemäss Anspruch 1, welche als Verdickungsmittel Alginate oder Emulsionen enthalten.

9. Lagerstabile Druckpasten gemäss Anspruch 12 welche je faserreaktivem Rest X die zweifache bis fünffache, insbesondere mindestens die dreifache bis fünffache stöchiometrische Menge Alkaliacetat, insbesondere Kaliumacetat und Natriumacetat enthalten.

10. Lagerstabile Druckpasten gemäss einem der Ansprüche 1 bis 9, welche als weitere Zusätze ε-Caprolactam, Thiodiäthylenglykol, Polyäthylenglykol, Pentaerythrit, Acetin oder Dicyandiamid enthalten.

11. Verwendung der lagerstabilen Druckpasten gemäss einem der Ansprüche 1 bis 10 zum Bedrucken von Cellulose-Fasern, dadurch gekennzeichnet, dass man das Textilmaterial mit den lagerstabilen Druckpasten bedruckt und anschliessend den Reaktivfarbstoff fixiert.

12. Verwendung gemäss Anspruch 11, dadurch gekennzeichnet, dass man reine Cellulose-Fasern bedruckt und die Reaktivfarbstoffe mit Dampf bei einer Temperatur von 100°C bis 140°C während 30 Sekunden bis 12 Minuten, insbesondere 2 bis 10 Minuten, fixiert.

**Claims**

1. A long-shelflife urea-free print paste for printing cellulosic fibres, containing, as the dye, at least one water-soluble reactive dye of the formula

$$D\text{-}(X)_m \qquad (1),$$

in which D is the radical of an organic dye of the monoazo, polyazo, metal complex azo, anthraquinone, phthalocyanine, formazan, azomethine, nitroaryl, dioxazine, phenazine or stilbene series, X is a fibre-reactive radical of the aliphatic, aromatic or heterocyclic series which is bonded to the radical D either directly or via a bridge member, and m is 1, 2, 3, 4, 5 or 6, and, per fibre-reactive radical, at least twice the stoichiometric amount of an alkali metal acetate, with the proviso that the print paste contains less than 60 g of sodium acetate as alkali metal acetate, per kg of print paste.

2. A long-shelflife print paste according to claim 1, which contains, per fibre-reactive radical X, at least three times the stoichiometric amount of alkali metal acetate.

3. A long-shelflife print paste according to claim 1, in which the alkali metal acetate is potassium acetate or in particular sodium acetate.

4. A long-shelflife print paste according to claim 1, which contains at least one water-soluble reactive dye of the formula

$$\left[ D\text{-}(X)_m \right] \text{-} (SO_3^{\ominus}\ Ka)_n \qquad (2)$$

in which D is the radical of a monoazo or disazo dye or of a metal complex azo, anthraquinone, formazan or dioxazine dye, Ka is a cation, n is 1, 2, 3, 4, 5 or 6, and X and m are as defined in claim 1.

5. A long-shelflife print paste according to claim 4, which contains at least one reactive dye of the formula (2) in which X is a radical of the formula

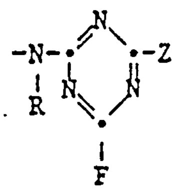

(3)

in which R is hydrogen or $C_{1-4}$alkyl and Z is a substituted or unsubstituted amino group, or in which X is a difluorochloropyrimidinyl radical bonded via an -N(R)-group or is a vinylsulfonyl, β-sulfatoethylsulfonyl, β-thiosulfatoethylsulfonyl, β-chloroethylsulfonyl or β-acetoxyethylsulfonyl radical which is bonded directly or via an aliphatic bridge member.

6. A long-shelflife print paste according to claim 4, in which m is 1 or 2.

7. A long-shelflife print paste according to claim 4, in which n is 2, 3 or 4.

8. A long-shelflife print paste according to claim 1, which contains alginates or emulsions as thickening agents.

9. A long-shelflife print paste according to claim 1, which contains, per fibre-reactive radical X, twice to five times, in particular at least three times to five times, the stoichiometric amount of alkali metal acetate, in particular potassium acetate and sodium acetate.

10. A long-shelflife print paste according to any one of claims 1 to 9, which contains as further additives ε-caprolactam, thiodiethylene glycol, polyethylene glycol, pentaerythritol, acetin or dicyandiamide.

11. Use of a long-shelflife print paste according to any one of claims 1 to 10, for printing cellulosic fibres, which comprises printing the textile material with the long-shelflife print paste and then fixing the reactive dye.

12. Use according to claim 11, wherein pure cellulosic fibres are printed and the reactive dyes are fixed at a temperature of 100°C to 140°C with steam in the course of 30 seconds to 12 minutes, in particular 2 to 10 minutes.

## Revendications

1. Pâtes à imprimer stables au stockage, exemptes d'urée, pour l'impression de fibres cellulosiques, contenant en tant que colorant au moins un colorant réactif soluble dans l'eau, de formule

$$D\text{-}(X)_m \qquad (1),$$

dans laquelle D est le reste d'un colorant organique de la série monoazoïque ou polyazoïque, azoïque à complexe métallique, anthraquinone, phtalocyanine, formazan, azométhine, nitroaryle, dioxazine, phénazine ou stilbène, X est un radical réactif avec les fibres, de la série aliphatique, aromatique ou hétérocyclique, qui est lié directement ou par l'intermédiaire d'un chaînon pontant au reste D, et m vaut 1, 2, 3, 4, 5 ou 6, et, par radical réactif avec les fibres, au moins la quantité deux fois stoechiométrique d'un acétate alcalin, avec la condition que la pâte à imprimer contient moins de 60 g d'acétate de sodium en tant qu'acétate alcalin, par kg de pâte à imprimer.

2. Pâtes à imprimer stables au stockage selon la revendication 1, lesquelles contiennent, par radical X réactif avec les fibres, au moins la quantité trois fois stoechiométrique d'acétate alcalin.

3. Pâtes à imprimer stables au stockage selon la revendication 1, dans lesquelles l'acétate alcalin est l'acétate de potassium ou en particulier l'acétate de sodium.

4. Pâtes à imprimer stables au stockage selon la revendication 1, contenant au moins un colorant réactif soluble dans l'eau, de formule

$$\left[ D\text{-}(X)_m \right] (SO_3^{\ominus} Ka)_n \qquad (2)$$

dans laquelle D est le reste d'un colorant monoazoïque ou disazoïque, d'un colorant azoïque à complexe métallique, anthraquinone, formazan ou dioxazine, Ka est un cation et n vaut 1, 2, 3, 4, 5 ou 6, et X et m ont les significations données dans la revendication 1.

5. Pâtes à imprimer stables au stockage selon la revendication 4, lesquelles contiennent au moins un colorant réactif de formule (2), dans lequel X représente un radical de formule

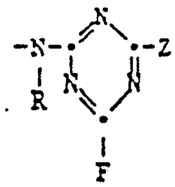 (3)

dans laquelle R est un atome d'hygrogène ou un groupe alkyle en $C_{1-4}$, et Z est un groupe amino éventuellement substitué, ou dans lequel X représente un radical difluorochloropyrimidinyle lié par l'intermédiaire d'un groupe -N(R)-, ou un radical vinylsulfonyle, β-sulfatoéthylsulfonyle, β-thiosulfatoéthylsulfonyle, β-chloréthylsulfonyle ou β-acétoxyéthylsulfonyle, lié directement ou par l'intermédiaire d'un chaînon pontant aliphatique.

6. Pâtes à imprimer stables au stockage selon la revendication 4, dans lesquelles m vaut 1 ou 2.

7. Pâtes à imprimer stables au stockage selon la revendication 4, dans lesquelles n vaut 2, 3 ou 4.

8. Pâtes à imprimer stables au stockage selon la revendication 1, lesquelles contiennent, en tant qu'épaississant, des alginates ou des émulsions.

9. Pâtes à imprimer stables au stockage selon la revendication 1, lesquelles contiennent, par radical X réactif avec les fibres, la quantité deux à cinq fois, en particulier au moins la quantité trois à cinq fois stoechiométrique d'acétate alcalin, en particulier d'acétate de potassium et d'acétate de sodium.

10. Pâtes à imprimer stables au stockage selon l'une des revendications 1 à 9, lesquelles contiennent, en tant qu'autres additifs, de 1'ε-caprolactame, du thiodiéthylèneglycol, du polyéthylèneglycol, du pentaérythritol, de l'acétine ou du dicyanodiamide.

11. Utilisation des pâtes à imprimer stables au stockage selon l'une des revendications 1 à 10, pour l'impression de fibres cellulosiques, caractérisée par le fait que l'on imprime le matériau textile avec les pâtes à imprimer stables au stockages, et ensuite on fixe le colorant réactif.

12. Utilisation selon la revendication 11, caractérisée par le fait que l'on imprime des fibres de cellulose pure et on fixe les colorants réactifs avec de la vapeur à une température de 100 à 140°C, pendant 30 secondes à 12 minutes, en particulier 2 à 10 minutes.